# EUROPEAN PATENT APPLICATION

(11) **EP 4 779 731 A1**
(43) Date of publication of application: **22.07.2026**
(21) Application number: 24919575.1
(22) Date of filing: 07.05.2024
(51) Int. Cl.: H01M 10/04, H01M 50/204, H01M 10/658

(54) **ADHESIVE APPLICATION DEVICE, ADHESIVE APPLICATION METHOD AND BATTERY PRODUCTION LINE**

(30) Priority: 23.01.2024 CN 202410090142
(71) Applicant: Contemporary Amperex Technology Co., Limited, Ningde, Fujian 352100 (CN)
(72) Inventor: WU, Kai, Ningde, Fujian 352100 (CN); WANG, Youshan, Ningde, Fujian 352100 (CN); YANG, Yule, Ningde, Fujian 352100 (CN); LI, Bingchao, Ningde, Fujian 352100 (CN)
(74) Representative: Lorenz Seidler Gossel Part. mbB
(86) International application number: PCT/CN2024/091389
(87) International publication number: WO 2025/156486

(57) **Abstract**

An adhesive tape attaching apparatus, an adhesive tape attaching method, and a battery production line are provided. The adhesive tape attaching apparatus includes a positioning mechanism and a sheet material attaching mechanism (200). The positioning mechanism is configured to position a sheet material (100). The sheet material (100) has an exposed first adhesive surface. The sheet material attaching mechanism (200) is configured to pick up the sheet material (100) positioned by the positioning mechanism and attach the sheet material (100) to a target position of a component to be attached. The positioning mechanism includes a base (1), a support platform (2), and a pushing assembly. The support platform (2) is disposed on the base (1) and configured to support the sheet material. The first adhesive surface of the sheet material comes into contact with a support surface of the support platform (2). The support platform (2) is provided with an anti-adhesive structure. The support surface of the support platform (2) includes at least the support surface of the anti-adhesive structure. The pushing assembly is disposed on the base (1) and configured to be able to push the sheet material (100) along a first direction and a second direction intersecting the first direction under the drive of a driving apparatus to position the sheet material (100).

## Description

### CROSS-REFERENCE TO RELATED APPLICATIONS

This disclosure claims priority to Chinese Patent Application No. 202410090142.5, filed on January 23, 2024 and titled "ADHESIVE TAPE ATTACHING APPARATUS, ADHESIVE TAPE ATTACHING METHOD, AND BATTERY PRODUCTION LINE", which is incorporated herein by reference in its entirety.

### TECHNICAL FIELD

This disclosure relates to the field of battery manufacturing technology, and in particular, to an adhesive tape attaching apparatus, an adhesive tape attaching method, and a battery production line.

### BACKGROUND

New energy batteries are increasingly widely used in daily life and industry. For example, new energy vehicles equipped with batteries have been widely used. In addition, batteries are also increasingly used in fields such as energy storage. In new energy vehicles equipped with batteries, the batteries can be configured to provide all or part of the power. In the field of energy storage, batteries can be installed in energy storage boxes or directly installed on the user side.

A battery module includes a plurality of battery cells, and the assembly accuracy of the battery module significantly affects the performance and safety of battery products. During the battery assembly process, operations such as attaching double-sided adhesive tapes or attaching thermal insulation pads are sometimes required. Improving the attachment accuracy is a critical aspect of enhancing the assembly accuracy of the battery module.

In addition, battery modules produced in a battery production line typically include various models. Therefore, there is an industry demand to improve the compatibility of the battery production line. Enhancing the compatibility of the attaching process helps to improve the compatibility of the battery production line. Therefore, how to improve the compatibility of the attaching process without reducing the attachment accuracy is one of the research topics in the industry.

### SUMMARY

To address the above technical problems, this disclosure provides an adhesive tape attaching apparatus, an adhesive tape attaching method, and a battery production line to improve the assembly accuracy of a battery module.

This disclosure is implemented through the following technical solutions.

According to a first aspect of this disclosure, an adhesive tape attaching apparatus is provided, including: a positioning mechanism configured to position a sheet material, the sheet material having an exposed first adhesive surface; and a sheet material attaching mechanism configured to pick up the sheet material positioned by the positioning mechanism and attach the sheet material to a target position of a component to be attached, where the positioning mechanism includes: a base; a support platform disposed on the base and configured to support the sheet material, where the first adhesive surface of the sheet material comes into contact with a support surface of the support platform, the support platform is provided with an anti-adhesive structure, and the support surface of the support platform includes at least a support surface of the anti-adhesive structure; and a pushing assembly, where the pushing assembly is disposed on the base and configured to be able to push the sheet material along a first direction and a second direction intersecting the first direction under the drive of a driving apparatus to position the sheet material; where the anti-adhesive structure includes a plurality of anti-adhesive protrusions, and the plurality of anti-adhesive protrusions are arranged at intervals.

When the adhesive tape attaching apparatus is configured to attach an adhesive tape, a sheet material with release paper on one surface removed is placed on the support surface of the support platform. In addition, the first adhesive surface exposed due to the removal of the release paper comes into contact with the support surface. The pushing assembly pushes the sheet material along the first direction and the second direction intersecting the first direction under the drive of the driving apparatus to position the sheet material. After positioning is completed, the sheet material attaching mechanism picks up the sheet material from the support surface and attaches the sheet material to the target position. During the adhesive tape attaching process, the positioning mechanism is configured to position the sheet material once, improving the position accuracy of the sheet material during the attaching process, thereby helping to improve the attachment accuracy of the sheet material.

In addition, the pushing assembly pushes the sheet material to position the sheet material. Therefore, the pushing assembly can change pushing strokes to position sheet materials of different sizes, thereby improving the compatibility of the attaching process without reducing the attachment accuracy.

In addition, the support platform is provided with the anti-adhesive structure. This reduces the adhesion between the first adhesive surface and the support surface, facilitating the pickup and removal actions of the sheet material attaching mechanism, and preventing the adhesion between the first adhesive surface and the support surface from affecting the adhesiveness of the first adhesive surface.

The plurality of anti-adhesive protrusions are provided, and the plurality of anti-adhesive protrusions are arranged at intervals. This further reduces a contact area between the support surface and the first adhesive surface and further reduces the adhesion between the first adhesive surface and the support surface, facilitating the pickup and removal actions of the sheet material attaching mechanism, and preventing the adhesion between the first adhesive surface and the support surface from affecting the adhesiveness of the first adhesive surface.

In some embodiments, the anti-adhesive protrusions are strip-shaped structures, and a plurality of strip-shaped structures are arranged parallel to each other and distributed at equal intervals on the support platform.

The strip-shaped structures are structures extending along a straight line, and the plurality of strip-shaped structures are arranged parallel to each other and distributed at equal intervals. The anti-adhesive protrusions provide stable and uniform support for the sheet material.

In some embodiments, the anti-adhesive structure includes an anti-adhesive layer, and the anti-adhesive layer is attached to the support surface of the support platform.

The anti-adhesive layer prevents the adhesion between the first adhesive surface and the support surface, facilitating the pickup and removal actions of the sheet material attaching mechanism, and preventing the adhesion between the first adhesive surface and the support surface from affecting the adhesiveness of the first adhesive surface.

In some embodiments, the anti-adhesive layer includes an anti-adhesive coating.

The anti-adhesive coating is formed by spraying an anti-adhesive coating material to the support surface of the support platform, preventing the adhesion between the first adhesive surface and the support surface, facilitating the pickup and removal actions of the sheet material attaching mechanism, and preventing the adhesion between the first adhesive surface and the support surface from affecting the adhesiveness of the first adhesive surface.

In some embodiments, the anti-adhesive coating includes at least one of polytetrafluoroethylene, polyvinyl acetate, polyethylene, and silicone.

The anti-adhesive coating formed from the above materials has a good adhesion prevention function, preventing the adhesion between the first adhesive surface and the support surface, facilitating the pickup and removal actions of the sheet material attaching mechanism, and preventing the adhesion between the first adhesive surface and the support surface from affecting the adhesiveness of the first adhesive surface.

In some embodiments, the support platform further includes a first reference surface extending along the first direction and a second reference surface extending along the second direction; a plane where the first reference surface is located and a plane where the second reference surface is located intersect at a corner of the support platform; and the pushing assembly is configured to push the sheet material toward the first reference surface and/or the second reference surface to make the sheet material abut against the first reference surface and/or the second reference surface.

When positioning is performed in two directions simultaneously, since the plane where the first reference surface is located and the plane where the second reference surface is located intersect at a corner of the support platform, after positioning is completed in both the first direction and the second direction, the sheet material is pushed to the corner of the support platform, achieving the precise positioning of the position. The provision of the first reference surface and the second reference surface achieves the positioning of the sheet material in two directions, improving the positioning accuracy of the sheet material. In addition, the sheet materials of different sizes are all positioned at the corner of the support platform, helping to improve the alignment accuracy between the sheet material and the target position, thereby improving the compatibility of the attaching process without reducing the attachment accuracy.

In some embodiments, at least one support platform is provided; the pushing assembly includes a first direction pushing assembly and a second direction pushing assembly; and the first direction pushing assembly and the second direction pushing assembly are provided corresponding to each support platform.

The first direction pushing assembly pushes the sheet material in the first direction to position the sheet material in the first direction, and the second direction pushing assembly pushes the sheet material in the second direction to position the sheet material in the second direction, thereby achieving the positioning of the sheet material on each support platform in two directions, and improving the positioning accuracy of each sheet material.

In some embodiments, the first direction pushing assembly includes: a first pushing member configured to come into contact with the sheet material and push the sheet material along the first direction; and a first connecting member connected to the first pushing member, disposed on the base, and capable of moving along the first direction under the drive of a first direction driving apparatus to push the first pushing member; and the second direction pushing assembly includes: a second pushing member configured to come into contact with the sheet material and push the sheet material along the second direction; and a second connecting member connected to the second pushing member, disposed on the base, and capable of moving along the second direction under the drive of a second direction driving apparatus to push the second pushing member.

This achieves the function of the first direction pushing assembly in pushing the sheet material along the first direction and the function of the second direction pushing assembly in pushing the sheet material along the second direction.

In some embodiments, a plurality of support platforms are provided, and the plurality of support platforms are arranged at intervals along the first direction; the first connecting members of the first direction pushing assemblies are connected to each other to form a first connecting plate, and the first connecting plate is connected to an output end of the first direction driving apparatus; and the second connecting members of the second direction pushing assemblies are connected to each other to form a second connecting plate, and the second connecting plate is connected to an output end of the second direction driving apparatus.

A plurality of first pushing members are connected to the output end of the first direction driving apparatus via the first connecting plate, allowing one first direction driving apparatus to simultaneously drive the plurality of first pushing members to move, thereby improving the positioning efficiency.

In some embodiments, the adhesive tape attaching apparatus further includes a control module, where the control module is configured to determine respective pushing strokes of the first pushing member and the second pushing member based on a size of the sheet material and control the first pushing member and the second pushing member to move with the respective pushing strokes.

The provision of the control module enables automatic control of switching of the pushing strokes of the first pushing member and the second pushing member, allowing the first pushing member and the second pushing member to move with the respective determined pushing strokes, thereby enabling the positioning of various sheet materials of different sizes.

In some embodiments, the first pushing member and the second pushing member are each provided with an elastic buffer pad, and the elastic buffer pad is configured to come into contact with the sheet material.

The provision of the elastic buffer pad prevents the first pushing member and the second pushing member from directly coming into contact with the sheet material and causing damage to the sheet material, thereby protecting the sheet material.

In some embodiments, one of the first connecting plate and the base is provided with a first slide rail, and the other is provided with a first slide block, where the first slide rail extends along the first direction, and the first slide block is slidably connected to the first slide rail; and one of the second connecting plate and the base is provided with a second slide rail, and the other is provided with a second slide block, where the second slide rail extends along the second direction, and the second slide block is slidably connected to the second slide rail.

The cooperation of the first slide rail and the first slide block guides the movement of the first connecting plate along the first direction, improving the stability of the movement of the first connecting plate. The cooperation of the second slide rail and the second slide block guides the movement of the second connecting plate along the second direction, improving the stability of the movement of the second connecting plate.

In some embodiments, the support platform is provided with a first avoidance groove extending along the first direction and a second avoidance groove extending along the second direction; the first avoidance groove and the second avoidance groove are respectively open at a side surface of the support platform; the first pushing member is capable of extending into the first avoidance groove; and the second pushing member is capable of extending into the second avoidance groove.

The provision of the first avoidance groove prevents the support platform from affecting a pushing range of the first pushing member. Therefore, the first avoidance groove allows the first pushing member to have a large pushing range in the first direction, thereby enabling the positioning of the sheet materials of different sizes in the first direction, and improving the compatibility of the adhesive tape attaching apparatus. In addition, the provision of the second avoidance groove prevents the support platform from affecting a pushing range of the second pushing member. Therefore, the second avoidance groove allows the second pushing member to have a large pushing range in the second direction, thereby enabling the positioning of the sheet materials of different sizes in the second direction, and improving the compatibility of the adhesive tape attaching apparatus.

In some embodiments, the sheet material attaching mechanism includes an adsorption apparatus, and the adsorption apparatus is configured to adsorb the positioned sheet material from the support platform and attach the sheet material to the target position of the component to be attached.

The adsorption apparatus achieves the pickup, alignment, and attachment of the sheet material, completing the adhesive tape attaching operation.

In some embodiments, the sheet material includes a thermal insulation pad, and the component to be attached includes a battery cell.

The adhesive tape attaching apparatus provided by the embodiments of this disclosure is applied to an operation of attaching the thermal insulation pad to the battery cell. Specifically, a thermal insulation pad with release paper on one surface removed is placed on the support surface of the support platform. In addition, the first adhesive surface exposed due to the removal of the release paper comes into contact with the support surface. The pushing assembly pushes the thermal insulation pad along the first direction and the second direction intersecting the first direction under the drive of the driving apparatus to position the thermal insulation pad. After positioning is completed, the sheet material attaching mechanism picks up the thermal insulation pad from the support surface and attaches the thermal insulation pad to a side wall of the battery cell. During the attaching process, the positioning mechanism is configured to position the thermal insulation pad once, improving the position accuracy of the thermal insulation pad during the attaching process, thereby helping to improve the alignment accuracy between the thermal insulation pad and the battery cell, and thus improving the attachment accuracy of the thermal insulation pad. In addition, the pushing assembly pushes the thermal insulation pad to position the thermal insulation pad. Therefore, the pushing assembly can change pushing strokes to position thermal insulation pads of different sizes, thereby improving the compatibility of the attaching process of the thermal insulation pad without reducing the attachment accuracy.

According to a second aspect of this disclosure, an adhesive tape attaching method is provided, where an adhesive tape attaching apparatus is configured to attach a sheet material to a component to be attached; the sheet material has a first adhesive surface exposed due to the removal of release paper; the adhesive tape attaching apparatus includes a positioning mechanism and a sheet material attaching mechanism; the positioning mechanism includes a base, a support platform, and a pushing assembly; the support platform is provided with an anti-adhesive structure; a support surface of the support platform includes at least a support surface of the anti-adhesive structure; and the anti-adhesive structure includes a plurality of anti-adhesive protrusions, and the plurality of anti-adhesive protrusions are arranged at intervals; where the adhesive tape attaching method includes: a placement step of placing the sheet material on the support platform with the first adhesive surface facing the anti-adhesive protrusion on the support surface of the support platform; a pushing stroke determining step of determining pushing strokes of the pushing assembly in a first direction and a second direction based on a size of the sheet material; and a pushing step of driving, by the driving apparatus, the pushing assembly to move with the determined pushing strokes to push the sheet material along the first direction and the second direction.

During the adhesive tape attaching process, the positioning mechanism is configured to position the sheet material once, improving the position accuracy of the sheet material during the attaching process, thereby helping to improve the alignment accuracy between the sheet material and the target position. In addition, the pushing strokes of the pushing assembly in the first direction and the second direction are determined based on the size of the sheet material, thereby allowing the adhesive tape attaching apparatus to position sheet materials of different sizes, and improving the compatibility of the adhesive tape attaching apparatus.

In some embodiments, the adhesive tape attaching method further includes: an attachment step of adsorbing, by the sheet material attaching mechanism, the positioned sheet material from the support platform and attaching the sheet material to a target position of a component to be attached.

This completes an operation of attaching the sheet material to the target position.

In some embodiments, the support platform further includes a first reference surface extending along the first direction and a second reference surface extending along the second direction; a plane where the first reference surface is located and a plane where the second reference surface is located intersect at a corner of the support platform; the pushing assembly is configured to push the sheet material toward the first reference surface and/or the second reference surface to make the sheet material abut against the first reference surface and/or the second reference surface; and the sheet material attaching mechanism includes a first adsorption head and at least one second adsorption head; where the attachment step includes: adsorbing, by the first adsorption head, a corner of the positioned sheet material near an intersection of the first reference surface and the second reference surface, and adsorbing, by the second adsorption head, other parts of the sheet material except the corner.

When positioning is performed in two directions simultaneously, since the plane where the first reference surface is located and the plane where the second reference surface is located intersect at a corner of the support platform, after positioning is completed in both the first direction and the second direction, the sheet material is pushed to the corner of the support platform. Sheet materials of different sizes each have one corner positioned at the corner of the support platform, so the sheet materials of different sizes are the same in a position of one corner. The first adsorption head adsorbs the corners with the same positions, ensuring adsorption of the sheet materials of different sizes; and the second adsorption head adsorbs another point on the sheet material, improving the adsorption stability.

According to a third aspect of this disclosure, a battery production line is provided, including: the adhesive tape attaching apparatus described above, where the sheet material includes a thermal insulation pad, the thermal insulation pad has a first adhesive surface and a second adhesive surface, and the target position includes a surface of a battery cell; a first release paper removal apparatus configured to remove a first release paper covering the first adhesive surface of the thermal insulation pad; and a second release paper removal apparatus configured to remove a second release paper covering the second adhesive surface of the thermal insulation pad.

The positioning mechanism of the adhesive tape attaching apparatus is configured to position the sheet material with the first adhesive surface exposed after the first release paper is removed by the first release paper removal apparatus; the sheet material attaching mechanism of the adhesive tape attaching apparatus is configured to pick up the sheet material positioned by the positioning mechanism and attach the sheet material to the surface of the battery cell; and the second release paper removal apparatus is configured to remove the second release paper from the sheet material attached to the battery cell.

### INVENTIVE EFFECTS

The embodiments of this disclosure provide the adhesive tape attaching apparatus, the adhesive tape attaching method, and the battery production line, capable of improving the compatibility of the attaching process without reducing the attachment accuracy.

### BRIEF DESCRIPTION OF DRAWINGS

By reading the detailed description of the preferred embodiments below, various other advantages and benefits will become apparent to those of ordinary skill in the art. The accompanying drawings are merely intended to illustrate the preferred embodiments and are not intended to limit this disclosure. Moreover, throughout the accompanying drawings, the same reference signs represent the same components. In the accompanying drawings:
FIG. 1 is a schematic structural diagram of a positioning mechanism according to some embodiments of this disclosure;
FIG. 2 is a partially enlarged schematic diagram at position A in FIG. 1;
FIG. 3 is a front view of a positioning mechanism according to some embodiments of this disclosure;
FIG. 4 is a top view of a positioning mechanism according to some embodiments of this disclosure;
FIG. 5 is a schematic diagram of constitution of an adhesive tape attaching apparatus according to some embodiments of this disclosure;
FIG. 6 is a schematic diagram of constitution of an action control module of an adhesive tape attaching apparatus according to some embodiments of this disclosure;
FIG. 7 is a schematic flowchart of an adhesive tape attaching method according to some embodiments of this disclosure; and
FIG. 8 is a schematic diagram of constitution of a battery production line according to some embodiments of this disclosure.

### Description of reference signs:

100. sheet material; 200. sheet material attaching mechanism; 1000. first release paper removal apparatus; 2000. second release paper removal apparatus;
1. base;
2. support platform; 21. anti-adhesive protrusion; 22. first avoidance groove; 23. second avoidance groove; 24. first reference surface; 25. second reference surface;
31. first direction pushing assembly; 311. first pushing member; 312. first direction driving apparatus; 313. first connecting plate; 32. second direction pushing assembly; 321. second pushing member; 322. second direction driving apparatus; 323. second connecting plate;
41. first slide rail; 42. first slide block; 43. second slide rail; 44. second slide block; and
5. control module.

### DESCRIPTION OF EMBODIMENTS

The embodiments of the technical solutions of this disclosure will be described in detail below with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein have the same meaning as commonly understood by those skilled in the technical field of this disclosure; the terms used herein are for the purpose of describing specific embodiments only and are not intended to limit this disclosure; and the terms "include", "have", and any variations thereof in the description and accompanying drawings of this disclosure are intended to cover non-exclusive inclusion.

In the description of the embodiments of this disclosure, the technical terms "first", "second", "third", and the like are used only to distinguish different objects and should not be construed as indicating or implying relative importance or implying the number, specific order, or primary-secondary relationship of the indicated technical features. In the description of the embodiments of this disclosure, "a plurality of" means two or more, unless explicitly and specifically limited otherwise.

Reference to "embodiment" herein means that a particular feature, structure, or characteristic described in connection with the embodiment may be included in at least one embodiment of this disclosure. The appearance of the phrase in various places in the specification does not necessarily refer to the same embodiment or an independent or alternative embodiment that is exclusive of other embodiments. Those skilled in the art will explicitly and implicitly understand that the embodiments described herein may be combined with other embodiments.

In the description of the embodiments of this disclosure, the term "and/or" merely describes an association relationship between associated objects, indicating that three relationships may exist. For example, A and/or B may indicate the following three cases: presence of only A; presence of both A and B; and presence of only B. In addition, the character "/" in this specification generally indicates an "or" relationship between the contextually associated objects.

In the description of the embodiments of this disclosure, the orientation or positional relationships indicated by technical terms such as "length", "width", "thickness", "upper", "lower", "front", "rear", "left", "right", "vertical", "horizontal", "top", "bottom", "inner", "outer", and "circumferential" are based on the orientation or positional relationships shown in the drawings, merely for the convenience of describing the embodiments of this disclosure and simplifying the description, and do not indicate or imply that the referred apparatus or element must have a specific orientation, be constructed, slotted, or used in a specific orientation, and thus should not be construed as limiting the embodiments of this disclosure.

In the description of the embodiments of this disclosure, unless explicitly specified and limited otherwise, technical terms such as "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Those of ordinary skill in the art can understand the specific meanings of the above terms in the embodiments of this disclosure based on specific circumstances.

In the description of the embodiments of this disclosure, unless explicitly specified and limited otherwise, the technical term "contact" should be broadly understood and may be direct contact, contact via an intermediate medium layer, contact with essentially no interaction force between two parties in contact with each other, or contact with interaction force between two parties in contact with each other.

This disclosure will be described in detail below.

Currently, new energy batteries are increasingly widely used in daily life and industry. New energy batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, and aerospace. With the continuous expansion of application fields of traction batteries, market demands for traction batteries are also increasing.

The assembly accuracy of battery modules significantly affects the performance and safety of battery products, and the assembly accuracy is directly related to the stability, reliability, and lifespan of an entire battery system. During the battery assembly process, processes such as attaching double-sided adhesive tapes or thermal insulation pads are sometimes required. Improving the attachment accuracy is a critical aspect of improving the assembly accuracy of battery modules.

In addition, battery modules produced in a battery production line typically include various models, so there is an industry demand to improve the compatibility of the battery production line. Improving the compatibility of the attaching process helps to improve the compatibility of the battery production line. Therefore, how to improve the compatibility of the attaching process without reducing the attachment accuracy is one of the research topics in the industry.

Currently, during the attaching process, release paper on one surface of a sheet material is first removed, and then the sheet material is directly moved, causing an adhesive surface exposed due to the removal of the release paper to be attached to a surface of a battery cell. The inventors of this disclosure have noted that in the aforementioned process, the position accuracy of the sheet material is difficult to control, easily leading to low alignment accuracy when attaching the sheet material to the battery cell, thereby affecting the assembly accuracy of the battery modules. In addition, when sheet materials of different models are attached, the accuracy is even lower, and even one adhesive tape attaching apparatus cannot be configured to perform the attaching operation, resulting in poor compatibility.

Through research, the inventors of this disclosure have found that after the release paper on one surface of the sheet material is removed, the sheet material is positioned once to adjust the position of the sheet material to a set state. This can improve the position accuracy of the sheet material during the attaching process, thereby improving the attachment accuracy. In addition, a movable pushing assembly is configured to position the sheet material. Since the pushing assembly can change pushing stroke based on different sizes of sheet materials, thereby enabling the positioning of various sheet materials of different sizes. This can improve the compatibility of the attaching process without reducing the attachment accuracy.

Based on this design concept, the inventors of this disclosure have designed an adhesive tape attaching apparatus. The adhesive tape attaching apparatus includes a positioning mechanism and a sheet material attaching mechanism. The positioning mechanism is configured to position a sheet material with release paper on one surface removed, so that the sheet material is positioned once during the attaching process, improving the position accuracy of the sheet material during the attaching process, thereby helping to improve the attachment accuracy. The positioning mechanism positions the sheet material through a pushing manner. The pushing assembly can change pushing strokes to position sheet materials of different sizes, thereby improving the compatibility of the attaching process without reducing the attachment accuracy. A support platform of the positioning mechanism is provided with an anti-adhesive structure. An exposed adhesive surface of the sheet material comes into contact with the anti-adhesive structure. This reduces the adhesion between the adhesive surface and a support surface, facilitating the pickup and removal actions of the sheet material attaching mechanism, and preventing the adhesion between the adhesive surface and the support surface from affecting the adhesiveness of the adhesive surface.

The adhesive tape attaching apparatus provided by the embodiments of this disclosure can be used in the assembly process of any apparatus that includes a sheet material and has certain requirements for the attachment accuracy of the sheet material, for example, but not limited to, an assembly process of battery modules. Since the adhesive tape attaching apparatus provided by the embodiments of this disclosure can improve the compatibility of the sheet material attaching process without reducing the sheet material attachment accuracy, the adhesive tape attaching apparatus provided by the embodiments of this disclosure can improve the compatibility of a process of attaching a thermal insulation pad to a battery cell without reducing the attachment accuracy between the thermal insulation pad and the battery cell.

The battery cell refers to a basic unit that can realize mutual conversion between chemical energy and electrical energy and can be used for manufacturing a battery module or a battery pack to supply power to an electric apparatus.

The battery cell may be a secondary battery. The secondary battery is a battery cell that can be recharged to activate an active material for continued use after discharge.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like. This is not limited in the embodiments of this disclosure.

In the embodiments of this disclosure, a battery may be a single physical module including one or more battery cells to provide a higher voltage and capacity. When a plurality of battery cells are provided, the plurality of battery cells are connected in series, parallel, or series-parallel via a busbar.

In some embodiments, the battery may be a battery module. When a plurality of battery cells are provided, the plurality of battery cells are arranged and fixed to form a battery module.

In some embodiments, the battery may be a battery pack. The battery pack includes a casing and a battery cell. The battery cell or the battery module is accommodated in the casing.

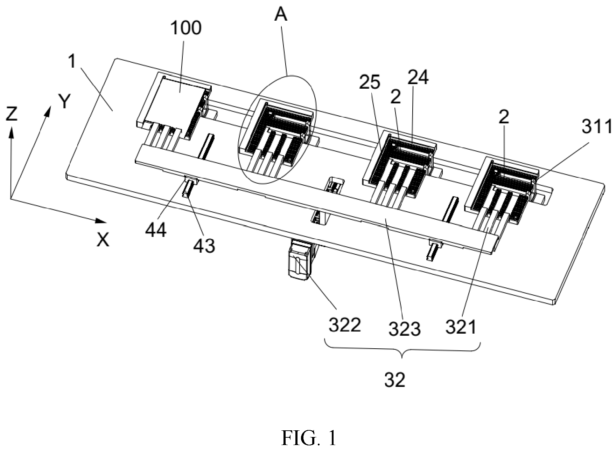

The following describes some embodiments of this disclosure in detail with reference to FIG. 1 to FIG. 8.

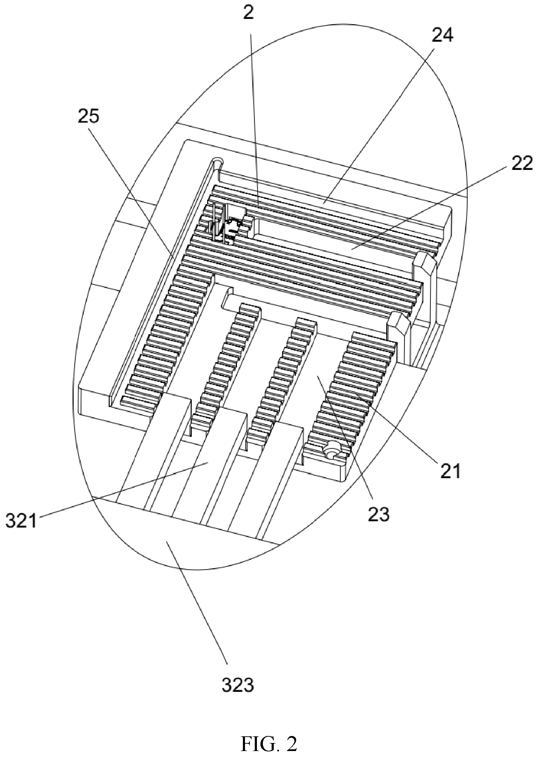

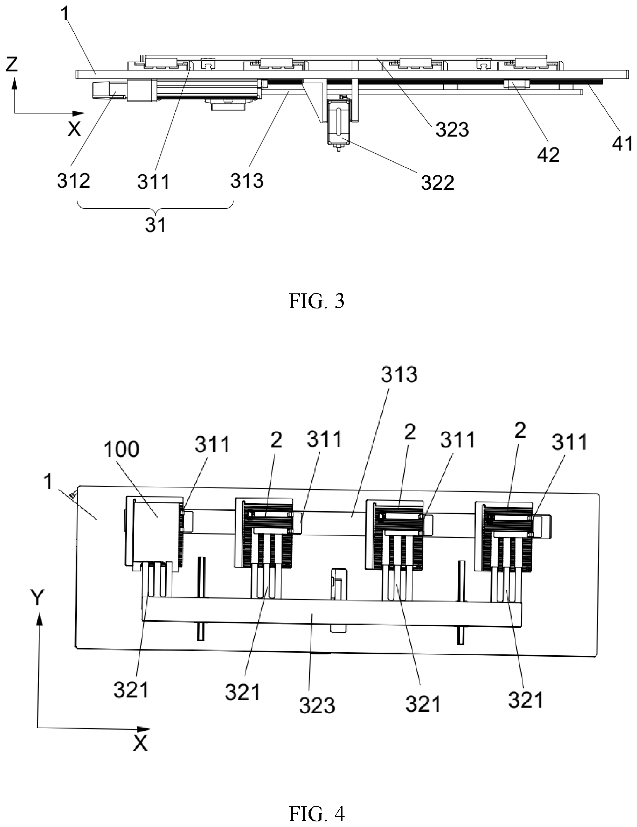

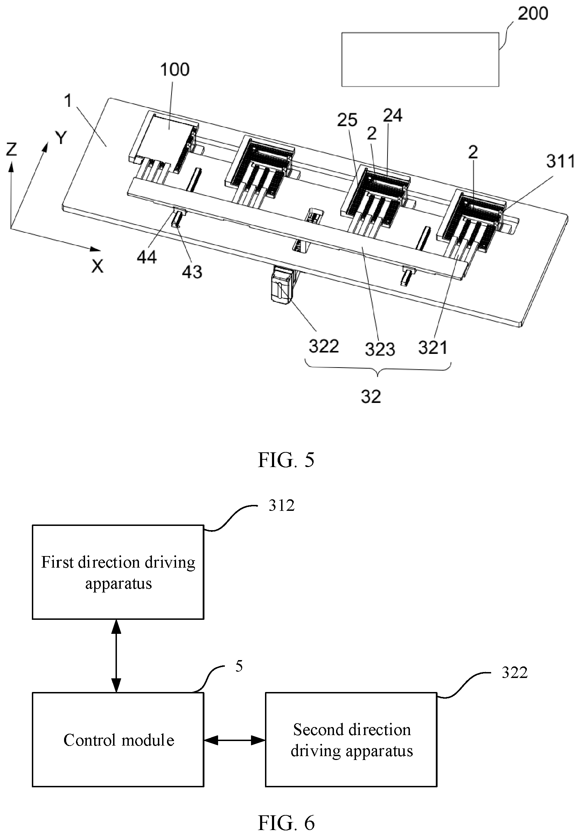

FIG. 1 is a schematic structural diagram of a positioning mechanism according to some embodiments of this disclosure. FIG. 2 is a partially enlarged schematic diagram at position A in FIG. 1. FIG. 3 is a front view of a positioning mechanism according to some embodiments of this disclosure. FIG. 4 is a top view of a positioning mechanism according to some embodiments of this disclosure. FIG. 5 is a schematic diagram of constitution of an adhesive tape attaching apparatus according to some embodiments of this disclosure. FIG. 6 is a schematic diagram of constitution of an action control module of an adhesive tape attaching apparatus according to some embodiments of this disclosure.

In some embodiments of this disclosure, for ease of description, a first direction, a second direction, and a third direction are defined. The first direction, the second direction, and the third direction are directions intersecting each other, where intersecting each other includes intersecting each other perpendicularly. For ease of understanding the embodiments of this disclosure, in the embodiments shown in FIG. 1 to FIG. 8, the first direction, an example where the second direction, and the third direction are directions intersecting each other perpendicularly is used for description, but those skilled in the art should understand that the embodiments of this disclosure are not limited to cases where these three directions intersect each other perpendicularly. For ease of description, as shown by the arrows in FIG. 1, FIG. 3 to FIG. 5, and FIG. 8, a direction of an arrow X is the first direction, a direction of an arrow Y is the second direction, and a direction of an arrow Z is the third direction. Sometimes, a direction pointed by an arrow Z along the third direction is referred to as "upward", and its opposite direction is referred to as "downward".

As shown in FIG. 1 to FIG. 5, an embodiment of this disclosure provides an adhesive tape attaching apparatus. The adhesive tape attaching apparatus includes a positioning mechanism and a sheet material attaching mechanism 200. The positioning mechanism is configured to position a sheet material 100. The sheet material 100 has an exposed first adhesive surface. The sheet material attaching mechanism 200 is configured to pick up the sheet material 100 positioned by the positioning mechanism and attach the sheet material 100 to a target position of a component to be attached.

The positioning mechanism includes a base 1, a support platform 2, and a pushing assembly. The support platform 2 is disposed on the base 1 and configured to support the sheet material 100. A first adhesive surface of the sheet material 100 comes into contact with a support surface of the support platform 2. The support platform 2 is provided with an anti-adhesive structure. The support surface of the support platform 2 includes at least a support surface of the anti-adhesive structure. The pushing assembly is disposed on the base 1 and configured to push the sheet material 100 along a first direction and a second direction intersecting the first direction under the drive of a driving apparatus to position the sheet material 100.

The sheet material 100 is a sheet-like object that has an adhesive surface on at least one side surface, and an adhesive surface on one side is exposed due to the removal of release paper. For example, the sheet material 100 may have an adhesive surface on only one side or adhesive surfaces on both sides. When the adhesive surfaces are provided on both sides, the adhesive surface on one side is exposed due to the removal of release paper, while the adhesive surface on the other side is covered by release paper. The adhesive tape attaching apparatus provided by this disclosure is configured to attach the exposed adhesive surface to the target position. The sheet material 100 may be an adhesive material solely for adhesion between two components or an adhesive material with an adhesion function and other functions, for example, but not limited to, a thermal insulation pad with a thermal insulation function, a thermally conductive pad with a thermal conduction function, or an insulating pad with an insulating function.

"The support surface of the support platform 2 includes at least a support surface of the anti-adhesive structure" means that a portion of the support surface of the support platform 2 may not be provided with the anti-adhesive structure, while another portion is provided with the anti-adhesive structure. In this case, at least a portion of the first adhesive surface comes into contact with the support surface of the anti-adhesive structure. Alternatively, the entire support surface of the support platform 2 may be the support surface of the anti-adhesive structure, that is, the entire first adhesive surface comes into contact with the support surface of the anti-adhesive structure.

When the adhesive tape attaching apparatus is configured to attach an adhesive tape, a sheet material 100 with release paper on one surface removed is placed on the support surface of the support platform 2. In addition, the first adhesive surface exposed due to the removal of the release paper comes into contact with the support surface. The pushing assembly pushes the sheet material 100 along the first direction and the second direction intersecting the first direction under the drive of the driving apparatus to position the sheet material 100. After positioning is completed, the sheet material attaching mechanism 200 picks up the sheet material 100 from the support surface and attaches the sheet material 100 to the target position. During the adhesive tape attaching process, the positioning mechanism is configured to position the sheet material 100 once, improving the position accuracy of the sheet material 100 during the attaching process, thereby helping to improve the attachment accuracy of the sheet material 100.

In addition, the pushing assembly pushes the sheet material 100 to position the sheet material 100. Therefore, the pushing assembly can change pushing strokes to position sheet materials 100 of different sizes, thereby improving the compatibility of the attaching process without reducing the attachment accuracy. In addition, the support platform 2 is provided with the anti-adhesive structure; the support surface of the support platform 2 includes at least the support surface of the anti-adhesive structure; and at least a portion of the first adhesive surface comes into contact with the support surface of the anti-adhesive structure. This reduces the adhesion between the first adhesive surface and the support surface, facilitating the pickup and removal actions of the sheet material attaching mechanism 200, and preventing the adhesion between the first adhesive surface and the support surface from affecting the adhesiveness of the first adhesive surface.

In some embodiments of this disclosure, the anti-adhesive structure includes a plurality of anti-adhesive protrusions 21, and the plurality of anti-adhesive protrusions 21 are arranged at intervals.

The anti-adhesive protrusions 21 are protruding structures formed by partial regions of a surface of the support platform 2 protruding toward a side away from the support platform 2. The provision of the protruding structures reduces a contact area when the support platform 2 comes into contact with other surfaces compared to a case without protruding structures. The anti-adhesive protrusions 21 may be integrally formed during the manufacturing of the support platform 2, or relatively small blocks may be connected to a surface of a plate to form the support platform 2. The relatively small blocks form the anti-adhesive protrusions 21. The anti-adhesive protrusions 21 may be spherical protrusions, cylindrical protrusions, truncated cone protrusions, strip-shaped protrusions, or conical protrusions, without specific limitation herein.

The plurality of anti-adhesive protrusions 21 are provided, and the plurality of anti-adhesive protrusions 21 are arranged at intervals. This further reduces a contact area between the support surface and the first adhesive surface and further reduces the adhesion between the first adhesive surface and the support surface, facilitating the pickup and removal actions of the sheet material attaching mechanism 200, and preventing the adhesion between the first adhesive surface and the support surface from affecting the adhesiveness of the first adhesive surface.

In some embodiments of this disclosure, the anti-adhesive protrusions 21 are strip-shaped structures, and a plurality of strip-shaped structures are arranged parallel to each other and distributed at equal intervals on the support platform 2.

The strip-shaped structures are structures extending along a straight line. The strip-shaped structures may extend along any direction within a plane where both the first direction and the second direction are located. The strip-shaped structures may extend along the first direction, the second direction, or another direction intersecting the first direction and the second direction.

With such arrangement, the anti-adhesive protrusion 21 provides stable and uniform support for the sheet material 100.

In some embodiments of this disclosure, the anti-adhesive protrusion 21 extends along the first direction or the second direction.

This allows the pushing assembly to push the sheet material 100 to move along the first direction or the second direction more smoothly.

In some embodiments of this disclosure, a cross section of the anti-adhesive protrusion 21 is square, and edges at the periphery of the support surface of the anti-adhesive protrusion 21 are chamfered.

The cross section of the anti-adhesive protrusion 21 refers to a section formed by cutting the anti-adhesive protrusion 21 with a plane perpendicular to an extension direction (a length direction) of the anti-adhesive protrusion 21. Setting the cross section of the anti-adhesive protrusion 21 to be square makes the support surface of the anti-adhesive protrusion 21 flat, allowing for stable support for the sheet material 100 and preventing curved surface support from affecting the shape of the sheet material 100.

The edges at the periphery of the support surface of the anti-adhesive protrusion 21 are chamfered. This can reduce a contact area between the anti-adhesive protrusions 21 and the first adhesive surface and prevent sharp corners from scratching the sheet material 100, thereby protecting the sheet material 100.

In some embodiments of this disclosure, the support surface of the support platform 2 is formed by the support surface of the anti-adhesive protrusion 21.

This arrangement further reduces the contact area between the support surface of the support platform 2 and the first adhesive surface and further reduces the adhesion between the first adhesive surface and the support surface, facilitating the pickup and removal actions of the sheet material attaching mechanism 200, and preventing the adhesion between the first adhesive surface and the support surface from affecting the adhesiveness of the first adhesive surface.

In some embodiments of this disclosure, the anti-adhesive structure includes an anti-adhesive layer, and the anti-adhesive layer is attached to the support surface of the support platform.

The anti-adhesive layer is a lamellar structure used to prevent the adhesion between the first adhesive surface and the support surface. The anti-adhesive layer is attached to the support surface and directly comes into contact with the first adhesive surface.

The anti-adhesive layer prevents the adhesion between the first adhesive surface and the support surface, facilitating the pickup and removal actions of the sheet material attaching mechanism 200, and preventing the adhesion between the first adhesive surface and the support surface from affecting the adhesiveness of the first adhesive surface.

In some embodiments of this disclosure, the anti-adhesive layer includes an anti-adhesive coating.

The anti-adhesive coating is formed by spraying an anti-adhesive coating material to the support surface of the support platform 2, preventing the adhesion between the first adhesive surface and the support surface, facilitating the pickup and removal actions of the sheet material attaching mechanism 200, and preventing the adhesion between the first adhesive surface and the support surface from affecting the adhesiveness of the first adhesive surface.

In some embodiments of this disclosure, the anti-adhesive coating includes at least one of polytetrafluoroethylene, polyvinyl acetate, polyethylene, and silicone.

The anti-adhesive coating formed from the above materials has a good adhesion prevention function, preventing the adhesion between the first adhesive surface and the support surface, facilitating the pickup and removal actions of the sheet material attaching mechanism 200, and preventing the adhesion between the first adhesive surface and the support surface from affecting the adhesiveness of the first adhesive surface.

In some embodiments of this disclosure, the support platform 2 further includes a first reference surface 24 extending along the first direction and a second reference surface 25 extending along the second direction. A plane where the first reference surface 24 is located and a plane where the second reference surface 25 is located intersect at a corner of the support platform 2. The pushing assembly is configured to push the sheet material 100 toward the first reference surface 24 and/or the second reference surface 25 to make the sheet material 100 abut against the first reference surface 24 and/or the second reference surface 25.

The pushing assembly pushes the sheet material 100 to abut against the first reference surface 24 for positioning the sheet material 100 in one direction; and the pushing assembly pushes the sheet material 100 to abut against the second reference surface 25 for positioning the sheet material 100 in the other direction. In actual use, the pushing assembly may perform positioning in only one direction or perform positioning in two directions.

"A plane where the first reference surface 24 is located and a plane where the second reference surface 25 is located intersect at a corner of the support platform 2" means that the first reference surface 24 and the second reference surface 25 may intersect or have a spacing therebetween. The corner may be any corner of the support platform 2, without limitation herein.

When positioning is performed in two directions simultaneously, since the plane where the first reference surface 24 is located and the plane where the second reference surface 25 is located intersect at a corner of the support platform 2, after positioning is completed in both the first direction and the second direction, the sheet material 100 is pushed to the corner of the support platform 2, achieving the precise positioning of the position. In addition, sheet materials 100 of different sizes are all positioned at the corner of the support platform 2, helping to improve the alignment accuracy between the sheet material 100 and the target position, thereby improving the compatibility of the adhesive tape attaching process without reducing the attachment accuracy.

The provision of the first reference surface 24 and the second reference surface 25 achieves the positioning of the sheet material 100 in two directions, improving the positioning accuracy of the sheet material 100.

In some embodiments of this disclosure, the first reference surface 24, the second reference surface 25, and the support surface of the support platform 2 are integrally formed.

This improves the relative position accuracy of the first reference surface 24, the second reference surface 25, and the support surface of the support platform 2, thereby helping to improve the positioning accuracy of the sheet material 100.

In some embodiments of this disclosure, the support platform 2 is provided with a first reference block and a second reference block. The first reference block and the second reference block are respectively disposed at two adjacent edges of the support surface of the support platform 2. A side surface of the first reference block close to the support surface includes the first reference surface 24. A side surface of the second reference block close to the support surface includes the second reference surface 25.

The provision of the first reference block and the second reference block forms the first reference surface 24 and the second reference surface 25.

In some embodiments of this disclosure, the support platform 2 is integrally formed, that is, the support surface, the first reference surface 24, and the second reference surface 25 of the support platform 2 are integrally formed.

In some embodiments of this disclosure, at least one support platform 2 is provided. The pushing assembly includes a first direction pushing assembly 31 and a second direction pushing assembly 32. The first direction pushing assembly 31 and the second direction pushing assembly 32 are provided corresponding to each support platform 2.

The first direction pushing assembly 31 pushes the sheet material 100 in the first direction to position the sheet material 100 in the first direction; and the second direction pushing assembly 32 pushes the sheet material 100 in the second direction to position the sheet material 100 in the second direction, thereby achieving the positioning of the sheet material 100 on each support platform 2 in two directions, and improving the positioning accuracy of each sheet material 100.

In some embodiments of this disclosure, the first direction pushing assembly 31 includes a first pushing member 311 and a first connecting member. The first pushing member 311 is configured to come into contact with the sheet material 100 and push the sheet material 100 along the first direction. The first connecting member is connected to the first pushing member 311, is disposed on the base 1, and is capable of moving along the first direction under the drive of a first direction driving apparatus 312 to push the first pushing member 311.

The above "contact" may be direct contact or indirect contact. That is, the first pushing member 311 may directly come into contact with the sheet material 100, or a buffer pad may be provided on the first pushing member 311 such that the first pushing member 311 indirectly comes into contact with the sheet material 100 via the buffer pad.

This achieves the function of the first direction pushing assembly 31 in pushing the sheet material 100 along the first direction.

In some embodiments of this disclosure, the second direction pushing assembly 32 includes a second pushing member 321 and a second connecting member. The second pushing member 321 is configured to come into contact with the sheet material 100 and push the sheet material 100 along the second direction. The second connecting member is connected to the second pushing member 321, is disposed on the base 1, and is capable of moving along the second direction under the drive of a second direction driving apparatus 322 to push the second pushing member 321.

The above "contact" may be direct contact or indirect contact. That is, the second pushing member 321 may directly come into contact with the sheet material 100, or a buffer pad may be provided on the second pushing member 321 such that the second pushing member 321 indirectly comes into contact with the sheet material 100 via the buffer pad.

This achieves the function of the second direction pushing assembly 32 in pushing the sheet material 100 along the second direction.

The first pushing member 311 is disposed toward the second reference surface 25. The sheet material 100 placed on the support surface is located between the first pushing member 311 and the second reference surface 25. The first pushing member 311 comes into contact with the sheet material 100 and pushes the sheet material 100 along the first direction, allowing the sheet material 100 to be pushed along the first direction to abut against the second reference surface 25.

The second pushing member 321 is disposed toward the first reference surface 24. The sheet material 100 placed on the support surface is located between the second pushing member 321 and the first reference surface 24. The second pushing member 321 comes into contact with the sheet material 100 and pushes the sheet material 100 along the second direction, allowing the sheet material 100 to be pushed along the second direction to abut against the first reference surface 24.

In some embodiments of this disclosure, a plurality of support platforms 2 are provided, and the plurality of support platforms 2 are arranged at intervals along the first direction. The first connecting members of the first direction pushing assemblies 31 are connected to each other to form a first connecting plate 313, and the first connecting plate 313 is connected to an output end of the first direction driving apparatus 312.

A plurality of first pushing members 311 are connected to the output end of the first direction driving apparatus 312 via the first connecting plate 313, allowing one first direction driving apparatus 312 to simultaneously drive the plurality of first pushing members 311 to move, thereby improving the positioning efficiency.

In some embodiments of this disclosure, the second connecting members of the second direction pushing assemblies 32 are connected to each other to form a second connecting plate 323, and the second connecting plate 323 is connected to an output end of the second direction driving apparatus 322.

A plurality of second pushing members 321 are connected to the output end of the second direction driving apparatus 322 via the second connecting plate 323, allowing one second direction driving apparatus 322 to simultaneously drive the plurality of second pushing members 321 to move, improving the positioning efficiency.

In some embodiments of this disclosure, the first direction driving apparatus 312 and the second direction driving apparatus 322 each include a servo motor, where the servo motor is disposed on the base 1.

The servo motor drives the first pushing member 311 and the second pushing member 321. A driving stroke of the servo motor can be conveniently changed, thereby enabling the positioning of various sheet materials 100 of different sizes, and improving the compatibility of the adhesive tape attaching apparatus.

In some embodiments of this disclosure, the adhesive tape attaching apparatus further includes a control module 5, where the control module 5 is configured to determine respective pushing strokes of the first pushing member 311 and the second pushing member 321 based on a size of the sheet material 100 and control the first pushing member 311 and the second pushing member 321 to move with the respective pushing strokes.

The provision of the control module 5 enables automatic control of switching of the pushing strokes of the first pushing member 311 and the second pushing member 321, allowing the first pushing member 311 and the second pushing member 321 to move with the respective determined pushing strokes, thereby enabling the positioning of various sheet materials 100 of different sizes.

In some embodiments of this disclosure, as shown in FIG. 6, the control module 5 controls the first direction driving apparatus 312 and the second direction driving apparatus 322 respectively to allow the first pushing member 311 and the second pushing member 321 to move with the respective pushing strokes.

The control module 5 achieves automatic switching of the driving stroke of the servo motor, enabling automatic switching of the pushing strokes of the first pushing member 311 and the second pushing member 321, allowing the first pushing member 311 and the second pushing member 321 to move with the respective determined pushing strokes, thereby enabling the positioning of various sheet materials 100 of different sizes.

In some embodiments of this disclosure, the first pushing member 311 and the second pushing member 321 are each provided with an elastic buffer pad, and the elastic buffer pad is configured to come into contact with the sheet material 100.

The elastic buffer pad includes at least one of a rubber buffer pad, a silicone buffer pad, and a foam buffer pad.

The provision of the elastic buffer pad prevents the first pushing member 311 and the second pushing member 321 from directly coming into contact with the sheet material 100 and causing damage to the sheet material 100, thereby protecting the sheet material 100.

In some embodiments of this disclosure, one of the first connecting plate 313 and the base 1 is provided with a first slide rail 41, and the other is provided with a first slide block 42. The first slide rail 41 extends along the first direction. The first slide block 42 is slidably connected to the first slide rail 41.

The cooperation of the first slide rail 41 and the first slide block 42 guides the movement of the first connecting plate 313 along the first direction, improving the stability of the movement of the first connecting plate 313.

In some embodiments of this disclosure, the base 1 is provided with the first slide rail 41, and the first connecting plate 313 is provided with the first slide block 42.

Since the base 1 has a relatively large size, the provision of the first slide rail 41 on the base 1 improves the installation stability of the first slide rail 41.

In some embodiments of this disclosure, two first slide rails 41 are spaced apart along the second direction, two first slide blocks 42 are provided, and the two first slide rails 41 and the two first slide blocks 42 are slidably connected to each other in a one-to-one correspondence.

The provision of two sets of first slide rails 41 and first slide blocks 42 further improves the stability of the movement of the first connecting plate 313.

In some embodiments of this disclosure, one of the second connecting plate 323 and the base 1 is provided with a second slide rail 43, and the other is provided with a second slide block 44. The second slide rail 43 extends along the second direction. The second slide block 44 is slidably connected to the second slide rail 43.

The cooperation of the second slide rail 43 and the second slide block 44 guides the movement of the second connecting plate 323 along the second direction, improving the stability of the movement of the second connecting plate 323.

In some embodiments of this disclosure, the base 1 is provided with the second slide rail 43, and the second connecting plate 323 is provided with the second slide block 44.

Since the base 1 has a relatively large size, the provision of the second slide rail 43 on the base 1 improves the installation stability of the second slide rail 43.

In some embodiments of this disclosure, two second slide rails 43 are spaced apart along the first direction, two second slide blocks 44 are provided, and the two second slide rails 43 and the two second slide blocks 44 are slidably connected to each other in a one-to-one correspondence.

The provision of two sets of second slide rails 43 and second slide blocks 44 further improves the stability of the movement of the second connecting plate 323.

In some embodiments of this disclosure, the base 1 is a rectangular plate. A length direction of the rectangular plate is the first direction, a width direction is the second direction, and a thickness direction is the third direction.

The plurality of support platforms 2 are arranged at intervals along the first direction, that is, the plurality of support platforms 2 are arranged at intervals along the length direction of the base 1, allowing for a reasonable layout, and reducing the space occupied by the adhesive tape attaching apparatus.

In some embodiments of this disclosure, as shown in FIG. 4, the support platform 2 is disposed above the base 1. The second connecting plate 323 is disposed above the base 1. One end of the second pushing member 321 is connected to the second connecting plate 323, and the other end extends toward the support platform 2 along the second direction to come into contact with and push the sheet material 100. As shown in FIG. 3, the second direction driving apparatus 322 is disposed below the base 1. An output shaft of the second direction driving apparatus 322 passes through the base 1 along the third direction to be connected to the second connecting plate 323.

Thus, the second connecting plate 323 and the second direction driving apparatus 322 are respectively disposed on an upper side and a lower side of the base 1, allowing for a reasonable layout and making a small area of an upper surface of the base 1 occupied.

In some embodiments of this disclosure, as shown in FIG. 3, both the first connecting plate 313 and the first direction driving apparatus 312 are disposed below the base 1. One end of the first pushing member 311 is connected to the first connecting plate 313, and the other end extends upward to pass through the base 1. A portion extending above the base 1 is configured to come into contact with and push the sheet material 100.

This allows for a reasonable layout and reduces the occupation of the upper surface of the base 1.

In some embodiments of this disclosure, the first pushing member 311 includes at least two first strip-shaped blocks. The at least two first strip-shaped blocks are arranged sequentially at intervals along the second direction. Each first strip-shaped block extends along the third direction, with one end connected to the first connecting plate 313 and the other end used to come into contact with and push the sheet material 100.

The at least two first strip-shaped blocks simultaneously come into contact with the sheet material 100, helping to improve the stability in pushing the sheet material 100 along the first direction.

In some embodiments of this disclosure, the second pushing member 321 includes at least two second strip-shaped blocks. The at least two second strip-shaped blocks are arranged sequentially at intervals along the first direction. Each second strip-shaped block extends along the second direction, with one end connected to the second connecting plate 323 and the other end used to come into contact with and push the sheet material 100.

The at least two second strip-shaped blocks simultaneously come into contact with the sheet material 100, helping to improve the stability in pushing the sheet material 100 along the second direction.

In some embodiments of this disclosure, the support platform 2 is provided with a first avoidance groove 22 extending along the first direction and a second avoidance groove 23 extending along the second direction. The first avoidance groove 22 and the second avoidance groove 23 are respectively open at a side surface of the support platform 2. The first pushing member 311 can extend into the first avoidance groove 22. The second pushing member 321 can extend into the second avoidance groove 23.

The provision of the first avoidance groove 22 prevents the support platform 2 from affecting a pushing range of the first pushing member 311. Therefore, the first avoidance groove 22 allows the first pushing member 311 to have a large pushing range in the first direction, thereby enabling the positioning of the sheet materials 100 of different sizes in the first direction, and improving the compatibility of the adhesive tape attaching apparatus.

In addition, the provision of the second avoidance groove 23 prevents the support platform 2 from affecting a pushing range of the second pushing member 321. Therefore, the second avoidance groove 23 allows the second pushing member 321 to have a large pushing range in the second direction, thereby enabling the positioning of the sheet materials 100 of different sizes in the second direction, and improving the compatibility of the adhesive tape attaching apparatus.

In some embodiments of this disclosure, the shape of the first avoidance groove 22 matches the shape of the first pushing member 311. The shape of the second avoidance groove 23 matches the shape of the second pushing member 321.

Thus, the compatibility is improved. In addition, two sidewalls of the first avoidance groove 22 limit two sides of the first pushing member 311, preventing the first pushing member 311 from tilting to the two sides, and improving the stability of the movement of the first pushing member 311. Similarly, two sidewalls of the second avoidance groove 23 limit two sides of the second pushing member 321, preventing the second pushing member 321 from tilting to the two sides, and improving the stability of the movement of the second pushing member 321.

In some embodiments of this disclosure, the first pushing member 311 includes at least two first strip-shaped blocks. The at least two first strip-shaped blocks are arranged sequentially at intervals along the second direction. The first avoidance groove 22 includes at least two first strip-shaped grooves matching the at least two first strip-shaped blocks in a one-to-one correspondence.

In some embodiments of this disclosure, the second pushing member 321 includes at least two second strip-shaped blocks. The at least two second strip-shaped blocks are arranged sequentially at intervals along the first direction. The second avoidance groove 23 includes at least two second strip-shaped grooves matching the at least two second strip-shaped blocks in a one-to-one correspondence.

In some embodiments of this disclosure, the sheet material attaching mechanism 200 includes an adsorption apparatus. The adsorption apparatus is configured to adsorb the positioned sheet material 100 from the support platform 2 and attach the sheet material 100 to the target position of the component to be attached.

The adsorption apparatus achieves the pickup, alignment, and attachment of the sheet material 100, completing the adhesive tape attaching operation.

The pushing assembly of the adhesive tape attaching apparatus pushes the sheet material to position the sheet material 100. Therefore, the pushing assembly can change pushing strokes to position sheet materials 100 of different sizes, thereby improving the compatibility of the attaching process on the battery cell without reducing the attachment accuracy.

In some embodiments of this disclosure, the target position includes at least one of a large surface, a side surface, a bottom surface, and a top surface of the battery cell.

In some embodiments of this disclosure, the adsorption apparatus can pick up the sheet material 100 with a set action and move along a set trajectory.

Thus, on the basis that the sheet material 100 is precisely positioned, the adsorption apparatus can pick up the sheet material 100 with the set action, allowing the sheet material 100 to represent a preset posture after picked up. Then, the adsorption apparatus moves along the set trajectory to attach the sheet material 100 to the battery cell.

It can be seen that throughout the above process, a position of the sheet material 100 is precisely controlled at each moment, resulting in high alignment accuracy between the sheet material 100 and the battery cell, thereby improving the assembly accuracy of the battery module.

In some embodiments of this disclosure, the adsorption apparatus includes an adsorption component and a moving apparatus. The adsorption component is connected to the moving apparatus, and the adsorption component is configured to adsorb the positioned sheet material 100 with a set posture. The moving apparatus is configured to move the adsorbed sheet material 100 along a set trajectory to attach the sheet material 100 to the target position of the component to be attached.

The mutual cooperation of the adsorption component and the moving apparatus achieves the function of the adsorption apparatus.

The adsorption component includes but is not limited to a suction cup. The moving apparatus includes but is not limited to a flipping apparatus. The flipping apparatus is configured to drive the adsorption component to flip, so that the sheet material 100 adsorbed on the adsorption component flips to be attached to the target position. Those skilled in the art can determine a radius and angle of a flipping action of the flipping apparatus based on factors such as a relative position of the support surface and the target position, thereby designing the flipping apparatus with the above functions without creative effort. The specific structure of the flipping apparatus is not described in detail herein.

In some embodiments of this disclosure, the adsorption component includes a first adsorption head and at least one second adsorption head. The first adsorption head is configured to adsorb a corner of the positioned sheet material 100 near an intersection of the first reference surface 24 and the second reference surface 25. The second adsorption head is configured to adsorb other parts of the sheet material 100 except the corner.

When positioning is performed in both the first direction and the second direction simultaneously, since the plane where the first reference surface 24 is located and the plane where the second reference surface 25 is located intersect at a corner of the support platform 2, after positioning is completed in both the first direction and the second direction, the sheet material 100 is pushed to the corner of the support platform 2. Sheet materials 100 of different sizes each have one corner positioned at the corner of the support platform 2, so the sheet materials 100 of different sizes are the same in a position of one corner. The first adsorption head adsorbs the corners with the same positions, ensuring adsorption of the sheet materials 100 of different sizes; and the second adsorption head adsorbs another point on the sheet material 100, improving the adsorption stability.

In some embodiments of this disclosure, the sheet material 100 includes a thermal insulation pad, and the component to be attached includes a battery cell.

The adhesive tape attaching apparatus provided by the embodiments of this disclosure is applied to an operation of attaching the thermal insulation pad to the battery cell. Specifically, a thermal insulation pad with release paper on one surface removed is placed on the support surface of the support platform 2. In addition, the first adhesive surface exposed due to the removal of the release paper comes into contact with the support surface. The pushing assembly pushes the thermal insulation pad along the first direction and the second direction intersecting the first direction under the drive of the driving apparatus to position the thermal insulation pad. After positioning is completed, the sheet material attaching mechanism 200 picks up the thermal insulation pad from the support surface and attaches the thermal insulation pad to a side wall of the battery cell. During the attaching process, the positioning mechanism is configured to position the thermal insulation pad once, improving the position accuracy of the thermal insulation pad during the attaching process, thereby helping to improve the alignment accuracy between the thermal insulation pad and the battery cell, and thus improving the attachment accuracy of the thermal insulation pad.

In addition, the pushing assembly pushes the thermal insulation pad to position the thermal insulation pad. Therefore, the pushing assembly can change pushing strokes to position thermal insulation pads of different sizes, thereby improving the compatibility of the attaching process of the thermal insulation pad without reducing the attachment accuracy.

In some embodiments of this disclosure, the adhesive tape attaching apparatus further includes a detection camera. The detection camera is configured to detect whether the attachment accuracy of the sheet material attached to the target position is qualified.

The detection camera checks whether the attachment accuracy of the sheet material is qualified to screen out battery cells with insufficient accuracy, further improving the attachment accuracy of the thermal insulation pad.

In some embodiments of this disclosure, the adhesive tape attaching apparatus further includes a loading mechanism. The loading mechanism is configured to place the sheet material 100 with the exposed first adhesive surface on the support surface of the support platform 2.

The provision of the loading mechanism achieves the loading of the sheet material 100 onto the support platform 2.

In some embodiments of this disclosure, the loading mechanism includes a pickup mechanism, a sliding guide rail, and an in-position detection member. The pickup mechanism is slidably connected to the sliding guide rail. The in-position detection member is configured to detect whether the pickup mechanism is at an unloading position. The pickup mechanism can release the sheet material 100 at the unloading position. The unloading position is located directly above the support surface of the support platform 2.

During operation, the pickup mechanism moves along the sliding guide rail. When the in-position detection member detects an in-position signal, the pickup mechanism moves to the unloading position. At this point, the pickup mechanism is located directly above the support surface of the support platform 2. The pickup mechanism releases the sheet material 100, and the sheet material 100 falls onto the support surface under gravity, completing the action of placing the sheet material 100 on the support surface of the support platform 2.

In some embodiments of this disclosure, the pickup mechanism may be an adsorption mechanism with a suction cup, a gripping mechanism with a claw, or any mechanical apparatus capable of picking up and releasing the sheet material 100. The in-position detection member may be any one of a photoelectric sensor, a pressure sensor, a cable sensor, a contact sensor, a distance measurement sensor, and the like.

In some embodiments of this disclosure, the adhesive tape attaching apparatus further includes a release paper removal mechanism. The release paper removal mechanism is configured to remove release paper on one surface of the sheet material 100. The sheet material 100 with release paper on one surface removed is transferred to the support surface of the support platform 2 via the loading mechanism. The specific structure and working principle of the release paper removal mechanism can refer to the prior art and are not described in detail herein.

An adhesive tape attaching method according to an embodiment of this disclosure is described below with reference to the accompanying drawings.

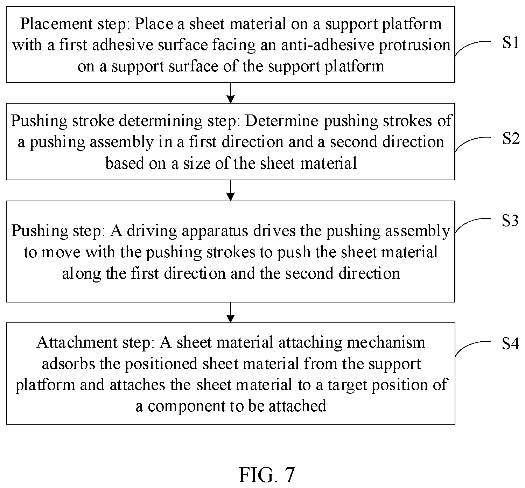

FIG. 7 is a schematic flowchart of an adhesive tape attaching method according to some embodiments of this disclosure.

As shown in FIG. 7, an embodiment of this disclosure provides an adhesive tape attaching method, where the adhesive tape attaching apparatus according to any one of the above embodiments is configured to attach a sheet material 100 to a component to be attached. The sheet material 100 has a first adhesive surface exposed due to the removal of release paper. The adhesive tape attaching apparatus includes a positioning mechanism and a sheet material attaching mechanism 200. The positioning mechanism includes a base 1, a support platform 2, and a pushing assembly. The support platform 2 is provided with an anti-adhesive structure. A support surface of the support platform 2 includes at least a support surface of the anti-adhesive structure. The anti-adhesive structure includes a plurality of anti-adhesive protrusions 21, and the plurality of anti-adhesive protrusions 21 are arranged at intervals. The adhesive tape attaching method includes the following steps.

S1. A placement step: Place the sheet material on the support platform with the first adhesive surface facing the anti-adhesive protrusion on the support surface of the support platform.

S2. A pushing stroke determining step: Determine pushing strokes of the pushing assembly in a first direction and a second direction based on a size of the sheet material.

S3. A pushing step: The driving apparatus drives the pushing assembly to move with the pushing strokes to push the sheet material along the first direction and the second direction.

During the adhesive tape attaching process, the positioning mechanism is configured to position the sheet material 100 once, improving the position accuracy of the sheet material 100 during the attaching process, thereby helping to improve the alignment accuracy between the sheet material 100 and the target position.

In addition, the pushing strokes of the pushing assembly in the first direction and the second direction are determined based on the size of the sheet material 100, thereby allowing the adhesive tape attaching apparatus to position sheet materials 100 of different sizes, and improving the compatibility of the adhesive tape attaching apparatus.

In some embodiments of this disclosure, the adhesive tape attaching method further includes the following step.

S4. An attachment step: The sheet material attaching mechanism adsorbs the positioned sheet material from the support platform and attaches the sheet material to a target position of a component to be attached.

This completes an operation of attaching the sheet material 100 to the target position.

In some embodiments of this disclosure, the support platform further includes a first reference surface extending along the first direction and a second reference surface extending along the second direction. A plane where the first reference surface is located and a plane where the second reference surface is located intersect at a corner of the support platform. The pushing assembly is configured to push the sheet material toward the first reference surface and/or the second reference surface to make the sheet material abut against the first reference surface and/or the second reference surface. The sheet material attaching mechanism includes a first adsorption head and at least one second adsorption head. The attachment step includes: The first adsorption head adsorbs a corner of the positioned sheet material near an intersection of the first reference surface and the second reference surface, and the second adsorption head adsorbs other parts of the sheet material except the corner.

When positioning is performed in two directions simultaneously, since the plane where the first reference surface is located and the plane where the second reference surface is located intersect at a corner of the support platform, after positioning is completed in both the first direction and the second direction, the sheet material is pushed to the corner of the support platform. Sheet materials of different sizes each have one corner positioned at the corner of the support platform, so the sheet materials of different sizes are the same in a position of one corner. The first adsorption head adsorbs the corners with the same positions, ensuring adsorption of the sheet materials of different sizes. The second adsorption head adsorbs another point on the sheet material, improving the adsorption stability.

In some embodiments of this disclosure, the adhesive tape attaching apparatus further includes a release paper removal mechanism and a loading mechanism. The loading mechanism includes a pickup mechanism, a sliding guide rail, and an in-position detection member. In the placement step, the release paper removal mechanism picks up a complete sheet material 100 from a material bin, and removes release paper on one surface of the complete sheet material 100 to make the first adhesive surface of the sheet material 100 exposed. The pickup mechanism picks up the sheet material 100 with the exposed first adhesive surface and moves along the sliding guide rail. In this step, the first adhesive surface faces downward; when the in-position detection member detects an in-position signal, the pickup mechanism stops moving; the pickup mechanism releases the sheet material 100; and the sheet material 100 moves vertically downward to the support surface of the support platform 2.

In some embodiments of this disclosure, in the pushing stroke determining step, the control module obtains width data and length data from the blueprint of the sheet material 100; and the control module determines pushing strokes of a first pushing member 311 and a second pushing member 321 respectively based on the width data and length data.

In some embodiments of this disclosure, in the pushing step, the control module controls a first direction driving apparatus 312 and a second direction driving apparatus 322 to start respectively; and the control module controls the first direction driving apparatus 312 and the second direction driving apparatus 322 to act respectively based on the determined pushing strokes, thereby driving the first pushing member 311 and the second pushing member 321 to respectively push the sheet material 100 along the first direction and the second direction until the sheet material 100 abuts against a first reference surface 24 and a second reference surface 25.

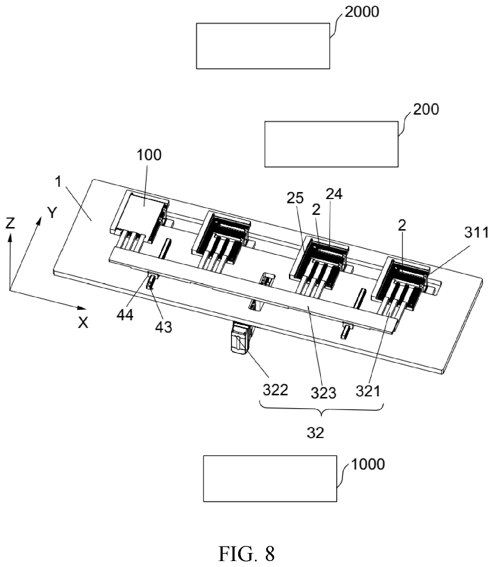

A battery production line according to an embodiment of this disclosure is described below with reference to FIG. 8.

FIG. 8 is a schematic diagram of constitution of a battery production line according to some embodiments of this disclosure.

As shown in FIG. 8, an embodiment of this disclosure further provides a battery production line. The battery production line includes a first release paper removal apparatus 1000, a second release paper removal apparatus 2000, and the adhesive tape attaching apparatus described above. The sheet material includes a thermal insulation pad. The thermal insulation pad has a first adhesive surface and a second adhesive surface. The target position includes a surface of a battery cell. The first release paper removal apparatus 1000 is configured to remove a first release paper covering the first adhesive surface of the thermal insulation pad. The second release paper removal apparatus 2000 is configured to remove a second release paper covering the second adhesive surface of the thermal insulation pad.

The positioning mechanism of the adhesive tape attaching apparatus is configured to position the sheet material 100 with the first adhesive surface exposed after the first release paper is removed by the first release paper removal apparatus 1000. The sheet material attaching mechanism 200 of the adhesive tape attaching apparatus is configured to pick up the sheet material 100 positioned by the positioning mechanism and attach the sheet material 100 to the surface of the battery cell. The second release paper removal apparatus 2000 is configured to remove the second release paper from the sheet material attached to the battery cell.

Thus, the second adhesive surface exposed after the removal of the second release paper from the sheet material 100 can be attached to another component to be attached. The another component to be attached includes a battery cell, thereby attaching the thermal insulation pad between two battery cells.

The above embodiments are only used to illustrate the technical solutions of this disclosure and not to limit this disclosure; although this disclosure has been described in detail with reference to the foregoing embodiments, those of ordinary skill in the art should understand that they can still modify the technical solutions described in the foregoing embodiments or make equivalent substitutions for some or all of the technical features; such modifications or substitutions do not cause the essence of the corresponding technical solutions to depart from the scope of the technical solutions of the embodiments of this disclosure, and they should fall within the scope of the description of this disclosure. In particular, as long as there is no structural conflict, the technical features mentioned in the various embodiments can be combined in any manner.

### INDUSTRIAL APPLICABILITY

This disclosure discloses an adhesive tape attaching apparatus, an adhesive tape attaching method, and a battery production line. The adhesive tape attaching apparatus includes a positioning mechanism and a sheet material attaching mechanism. The positioning mechanism is configured to position a sheet material. The sheet material has an exposed first adhesive surface. The sheet material attaching mechanism is configured to pick up the sheet material positioned by the positioning mechanism and attach the sheet material to a target position of a component to be attached. The positioning mechanism includes a base, a support platform, and a pushing assembly. The support platform is disposed on the base and configured to support the sheet material. The first adhesive surface of the sheet material comes into contact with a support surface of the support platform. The support platform is provided with an anti-adhesive structure. The support surface of the support platform includes at least a support surface of the anti-adhesive structure. The pushing assembly is disposed on the base and configured to be able to push the sheet material along a first direction and a second direction intersecting the first direction under the drive of a driving apparatus to position the sheet material. The adhesive tape attaching apparatus, the adhesive tape attaching method, and the battery production line provided by this disclosure improve the assembly accuracy and compatibility of battery modules.

## Claims

1. An adhesive tape attaching apparatus, comprising:
a positioning mechanism configured to position a sheet material, the sheet material having an exposed first adhesive surface; and
a sheet material attaching mechanism configured to pick up the sheet material positioned by the positioning mechanism and attach the sheet material to a target position of a component to be attached, wherein
the positioning mechanism comprises:
a base;
a support platform disposed on the base and configured to support the sheet material, wherein the first adhesive surface of the sheet material comes into contact with a support surface of the support platform, the support platform is provided with an anti-adhesive structure, and the support surface of the support platform comprises at least a support surface of the anti-adhesive structure; and
a pushing assembly, wherein the pushing assembly is disposed on the base and configured to be able to push the sheet material along a first direction and a second direction intersecting the first direction under the drive of a driving apparatus to position the sheet material; wherein
the anti-adhesive structure comprises a plurality of anti-adhesive protrusions, and the plurality of anti-adhesive protrusions are arranged at intervals.

2. The adhesive tape attaching apparatus according to claim 1, wherein the anti-adhesive protrusions are strip-shaped structures, and a plurality of strip-shaped structures are arranged parallel to each other and distributed at equal intervals on the support platform.

3. The adhesive tape attaching apparatus according to claim 1 or 2, wherein the anti-adhesive structure comprises an anti-adhesive layer, and the anti-adhesive layer is attached to the support surface of the support platform.

4. The adhesive tape attaching apparatus according to claim 3, wherein the anti-adhesive layer comprises an anti-adhesive coating.

5. The adhesive tape attaching apparatus according to claim 4, wherein the anti-adhesive coating comprises at least one of polytetrafluoroethylene, polyvinyl acetate, polyethylene, and silicone.

6. The adhesive tape attaching apparatus according to any one of claims 1 to 5, wherein the support platform further comprises a first reference surface extending along the first direction and a second reference surface extending along the second direction; a plane where the first reference surface is located and a plane where the second reference surface is located intersect at a corner of the support platform; and the pushing assembly is configured to push the sheet material toward the first reference surface and/or the second reference surface to make the sheet material abut against the first reference surface and/or the second reference surface.

7. The adhesive tape attaching apparatus according to any one of claims 1 to 6, wherein
at least one support platform is provided;
the pushing assembly comprises a first direction pushing assembly and a second direction pushing assembly; and
the first direction pushing assembly and the second direction pushing assembly are provided corresponding to each support platform.

8. The adhesive tape attaching apparatus according to claim 7, wherein
the first direction pushing assembly comprises:
a first pushing member configured to come into contact with the sheet material and push the sheet material along the first direction; and
a first connecting member connected to the first pushing member, disposed on the base, and capable of moving along the first direction under the drive of a first direction driving apparatus to push the first pushing member; and
the second direction pushing assembly comprises:
a second pushing member configured to come into contact with the sheet material and push the sheet material along the second direction; and
a second connecting member connected to the second pushing member, disposed on the base, and capable of moving along the second direction under the drive of a second direction driving apparatus to push the second pushing member.

9. The adhesive tape attaching apparatus according to claim 8, wherein
a plurality of support platforms are provided, and the plurality of support platforms are arranged at intervals along the first direction;
the first connecting members of the first direction pushing assemblies are connected to each other to form a first connecting plate, and the first connecting plate is connected to an output end of the first direction driving apparatus; and
the second connecting members of the second direction pushing assemblies are connected to each other to form a second connecting plate, and the second connecting plate is connected to an output end of the second direction driving apparatus.

10. The adhesive tape attaching apparatus according to claim 9, wherein
the adhesive tape attaching apparatus further comprises a control module, wherein
the control module is configured to determine respective pushing strokes of the first pushing member and the second pushing member based on a size of the sheet material and control the first pushing member and the second pushing member to move with the respective pushing strokes.

11. The adhesive tape attaching apparatus according to any one of claims 8 to 10, wherein the first pushing member and the second pushing member are each provided with an elastic buffer pad, and the elastic buffer pad is configured to come into contact with the sheet material.

12. The adhesive tape attaching apparatus according to any one of claims 9 to 11, wherein
one of the first connecting plate and the base is provided with a first slide rail, and the other is provided with a first slide block, wherein the first slide rail extends along the first direction, and the first slide block is slidably connected to the first slide rail; and
one of the second connecting plate and the base is provided with a second slide rail, and the other is provided with a second slide block, wherein the second slide rail extends along the second direction, and the second slide block is slidably connected to the second slide rail.

13. The adhesive tape attaching apparatus according to any one of claims 8 to 12, wherein the support platform is provided with a first avoidance groove extending along the first direction and a second avoidance groove extending along the second direction; the first avoidance groove and the second avoidance groove are respectively open at a side surface of the support platform; the first pushing member is capable of extending into the first avoidance groove; and the second pushing member is capable of extending into the second avoidance groove.

14. The adhesive tape attaching apparatus according to any one of claims 1 to 13, wherein the sheet material attaching mechanism comprises an adsorption apparatus, and the adsorption apparatus is configured to adsorb the positioned sheet material from the support platform and attach the sheet material to the target position of the component to be attached.

15. The adhesive tape attaching apparatus according to any one of claims 1 to 14, wherein the sheet material comprises a thermal insulation pad, and the component to be attached comprises a battery cell.

16. An adhesive tape attaching method, wherein an adhesive tape attaching apparatus is configured to attach a sheet material to a component to be attached; the sheet material has a first adhesive surface exposed due to the removal of release paper; the adhesive tape attaching apparatus comprises a positioning mechanism and a sheet material attaching mechanism; the positioning mechanism comprises a base, a support platform, and a pushing assembly; the support platform is provided with an anti-adhesive structure; a support surface of the support platform comprises at least a support surface of the anti-adhesive structure; and the anti-adhesive structure comprises a plurality of anti-adhesive protrusions, and the plurality of anti-adhesive protrusions are arranged at intervals; wherein the adhesive tape attaching method comprises:
a placement step of placing the sheet material on the support platform with the first adhesive surface facing the anti-adhesive protrusion on the support surface of the support platform;
a pushing stroke determining step of determining pushing strokes of the pushing assembly in a first direction and a second direction based on a size of the sheet material; and
a pushing step of driving, by the driving apparatus, the pushing assembly to move with the determined pushing strokes to push the sheet material along the first direction and the second direction.

17. The adhesive tape attaching method according to claim 16, wherein the adhesive tape attaching method further comprises:
an attachment step of adsorbing, by the sheet material attaching mechanism, the positioned sheet material from the support platform and attaching the sheet material to a target position of a component to be attached.

18. The adhesive tape attaching method according to claim 17, wherein the support platform further comprises a first reference surface extending along the first direction and a second reference surface extending along the second direction; a plane where the first reference surface is located and a plane where the second reference surface is located intersect at a corner of the support platform; the pushing assembly is configured to push the sheet material toward the first reference surface and/or the second reference surface to make the sheet material abut against the first reference surface and/or the second reference surface; and
the sheet material attaching mechanism comprises a first adsorption head and at least one second adsorption head; wherein
the attachment step comprises:
adsorbing, by the first adsorption head, a corner of the positioned sheet material near an intersection of the first reference surface and the second reference surface, and adsorbing, by the second adsorption head, other parts of the sheet material except the corner.

19. A battery production line, comprising:
the adhesive tape attaching apparatus according to any one of claims 1 to 15, wherein the sheet material comprises a thermal insulation pad, the thermal insulation pad has a first adhesive surface and a second adhesive surface, and the target position comprises a surface of a battery cell;
a first release paper removal apparatus configured to remove a first release paper covering the first adhesive surface of the thermal insulation pad; and
a second release paper removal apparatus configured to remove a second release paper covering the second adhesive surface of the thermal insulation pad; wherein
the positioning mechanism of the adhesive tape attaching apparatus is configured to position the sheet material with the first adhesive surface exposed after the first release paper is removed by the first release paper removal apparatus; the sheet material attaching mechanism of the adhesive tape attaching apparatus is configured to pick up the sheet material positioned by the positioning mechanism and attach the sheet material to the surface of the battery cell; and the second release paper removal apparatus is configured to remove the second release paper from the sheet material attached to the battery cell.
